Europäisches Patentamt

European Patent Office

Office européen des brevets

(11) Veröffentlichungsnummer : **0 021 387 B1**

# (12) EUROPÄISCHE PATENTSCHRIFT

(45) Veröffentlichungstag der Patentschrift :
13.07.83

(21) Anmeldenummer : **80103514.8**

(22) Anmeldetag : **23.06.80**

(51) Int. Cl.³ : **H 04 L   9/00, H 04 K   1/00**

(54) **Schaltungsanordnung zur Ausgabe von Nachrichten an einen empfangsbefugten Personenkreis.**

(30) Priorität : **27.06.79 DE 2926013**

(43) Veröffentlichungstag der Anmeldung :
**07.01.81 Patentblatt 81/01**

(45) Bekanntmachung des Hinweises auf die Patenterteilung : **13.07.83 Patentblatt 83/28**

(84) Benannte Vertragsstaaten :
**BE CH GB LI NL SE**

(56) Entgegenhaltungen :
**DE A 2 154 018**
**DE A 2 231 835**
**DE B 2 232 256**

(73) Patentinhaber : **SIEMENS AKTIENGESELLSCHAFT**
**Berlin und München Wittelsbacherplatz 2**
**D-8000 München 2 (DE)**

(72) Erfinder : **Markwitz, Wernhard, Dipl.-Ing.**
**Thalkirchner Strasse 107**
**D-8000 München 70 (DE)**

EP 0 021 387 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# 0 021 387

Schaltungsanordnung zur Ausgabe von Nachrichten an einen empfangsbefugten Personenkreis

Die Erfindung bezieht sich auf eine Schaltungsanordnung zur Ausgabe von Nachrichten an einen empfangsbefugten Personenkreis entsprechend dem Oberbegriff des Anspruches 1.

Bekanntlich werden Klartexte im Bereich einer ersten gesicherten Zone verfaßt, verschlüsselt und anschließend in verschlüsselter Form über einen nichtgesicherten Bereich einer zweiten gesicherten Zone zugeleitet; dort werden die verschlüsselten Nachrichtentexte von empfangsbefugten Personen entschlüsselt und weiteren empfangsbefugten Personen der zweiten Zone zugeleitet. Da an beiden Zonen nur empfangsbefugte Personen tätig sind, und da der zu übertragende Nachrichtentext außerhalb dieser Zonen in verschlüsselter Form vorliegt, sollte es hinsichtlich der Geheimhaltung keine grundsätzlichen Schwierigkeiten geben. Falls dagegen im Bereich der zweiten Zone nicht nur empfangsbefugte Personen tätig sind, sondern auch nichtempfangsbefugte Personen tätig sind, dann kann es schwierig sein, als vertraulich gekennzeichnete Nachrichtentexte den empfangsbefugten Personen zuzuleiten. Wenn ein Nachrichtentext verschlüsselt übertragen wird und am Empfangsort entweder sofort entschlüsselt oder zunächst verschlüsselt gespeichert wird, dann besteht die Möglichkeit, daß der gespeicherte Nachrichtentext von nicht dazu befugten Personen kopiert oder entfernt wird.

Der Erfindung liegt die Aufgabe zugrunde, eine Schaltungsanordnung anzugeben, bei deren Verwendung die ständige Anwesenheit einer Bedienungsperson nicht erforderlich ist und dennoch empfangsberechtigte Personen an Ort und Stelle die für sie bestimmten Nachrichten entschleiern können, ohne daß besondere Geheimhaltungsrisiken auftreten.

Erfindungsgemäß wird die Aufgabe durch die im kennzeichnenden Teil des Anspruches 1 angegebenen Merkmale gelöst.

Die interne Speicherung bringt es mit sich, daß bei der Ausgabe der Nachrichten eine Auslese stattfinden muß. Eine Auslese ist aber bei verschleiertem Text schwierig durchzuführen. Eine mögliche Entschleierung und Ausgabe aller gespeicherten Nachrichten auf einmal würde die Geheimhaltungssicherheit beeinträchtigen und verhindern, daß man in verschiedenem Umfang empfangsberechtigte Personenkreise festlegen könnte. Deshalb müssen die gespeicherten Nachrichten bis auf die auszugebende Nachricht verschleiert bleiben, was die Ausgabe der Adressen erforderte, wo die einzelnen Nachrichten im Speicher gespeichert sind. Diese aber würde für Unbefugte noch Rückschlüsse aud z. B. die Länge der gespeicherten Nachrichten zulassen. Für optimale Sicherheit und auch zur Bedienungserleichterung werden deshalb die Adressen in Gestalt einer intern den Adressen zugeordneten Nummer ausgegeben.

Als empfangsbefugter Personenkreis kann nur eine einzige Person vorgesehen sein, der spezielle Schlüsseldaten zugeordnet sind. Als empfangsbefugter Personenkreis können aber auch mehrere Personen vorgesehen sein, denen je die Schlüsseldaten zur Verfügung stehen und von denen jeder einzelne befugt ist, den Nachrichtentext allein zu empfangen.

Als empfangsbefugter Personenkreis können aber auch mehrere Personen vorgesehen sein, die nur gemeinsam den Nachrichtentext empfangen dürfen. In diesem Falle ist es zweckmäßig, die Schlüsseldaten in mehrere Teile aufzuteilen, von denen jeder Teil je einer Person zugeordnet ist.

Bei der Verwendung der Schaltungsanordnung fogt auf einen nichtverschleierten Vorspann ein als vertraulich signalisierter, verschleierter Nachrichtentext. Da der nichterschleierte Vorspann und der verschleierte Nachrichtentext verschieden behandelt werden, ist es erforderlich, das Ende des nichtverschleierten Vorspanns zu signalisieren. Falls Einrichtungen zur Erkennung des Endes des Vorspanns eingespart werden sollen, ist es zweckmäßig, wenn die Kennung, welche den Nachrichtentext als vertraulich signalisiert, zuletz im unverschleierten Vorspann gesendet wird. Unter diesen Voraussetzungen kann mit einer einzigen Einrichtung einerseits das Ende des Vorspanns und andererseits jene Kennung signalisiert werden, welche den Nachrichtentext als vertraulich signalisiert.

Es wäre grundsätzlich möglich, den Nachrichtentext unverschleiert als Klartext im Speicher zu speichern. Damit der Nachrichtentext selbst bei nichtbefugter Auslesung aus dem Speicher vertraulich bleibt, wird der Nachrichtentext in verschleierter Form in Speicher gespeichert.

Die Schlüsseldaten können mit Hilfe aller Datenspeicher eingegeben werden. Beispielsweise können also zur Eingabe der Schlüsseldaten Magnetkarten, Lochkarten, Festwertspeicher und mechanische Schüssel verwendet werden, die ebenfalls als Datenspeicher verwendbar sind. Falls die unbefugte Entnahme des Nachrichtentextes besonders gut gesichert werden soll, ist es vorteilhaft, daß der empfangsbefugte Personenkreis zur Eingabe der Schlüsseldaten einen Festwertspeicher verwendet, der über einem Stecker eine dem empfangsbefugten Personenkreis zugeordnete Datenkombination abgibt.

Im folgenden werden Ausführungsbeispiele der Erfindung anhand der Fig. 1 bis 5 beschrieben, wobei in mehreren Figuren dargestellte gleiche Gegenstände mit gleichen Bezugszeichen bezeichnet sind. Es zeigen.

Figur 1   ein Blockschaltbild eines Datenübertragungssystems,

Figur 2   ein sendeseitiges Zugriffsicherungsgerät,

Figur 3   ein empfangsseitiges Zugriffsicherungsgerät,

Figur 4   ein sendeseitiges Zugriffsicherungsgerät, mit Hilfe dessen örtlich errechnete und empfangene Prüfbits im Klartext verglichen werden und

Figur 5   ein empfangsseitiges Zugriffsicherungsgerät, mit Hilfe dessen örtlich errechnete Prüfbits

2

und gespeicherte Prüfbits im Klartext verglichen werden.

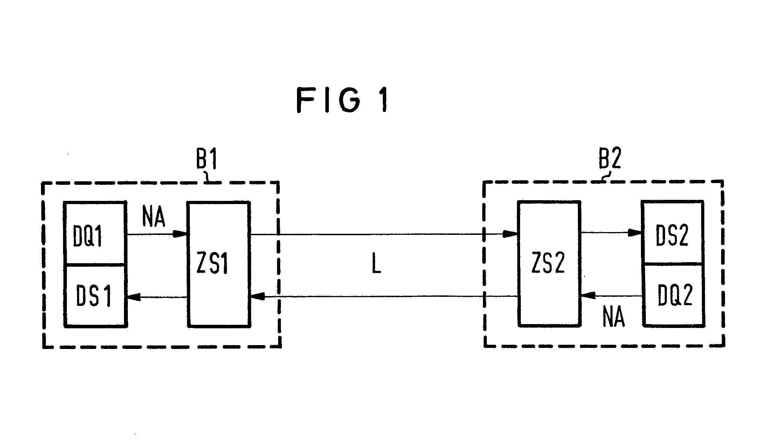

Gemäß Fig. 1 wird eine Nachricht NA der Datenquelle DQ1 über das Zugriffsicherungsgerät ZS1, über die Leitungen L, über das Zugriffsicherungsgerät ZS2 der Datensenke DS2 zugeleitet. In ähnlicher Weise können Nachrichten der Datenquelle DQ2 über die beiden Zugriffsicherungsgeräte ZS2 und ZS1 und über die Leitung L der Datensenke DS1 zugeleitet werden. Falls innerhalb der Bereiche B1 und B2 nur empfangsbefugte Personen tätig sind und falls über die Leitungen L verschlüsselte Nachrichten übertragen werden, dann sollte es hinsichtlich der Geheimhaltung der Nachrichten keine grundsätzlichen Schwierigkeiten geben. Falls jedoch im Bereich B2 außer den empfangebefugten Personen auch andere, nichtempfangsbefugte Personen tätig sind, dann besteht grundsätzlich die Möglichkeit, daß nichtempfangsbefugte Personen geheimzuhaltende Nachrichten erhalten. Wenn beispielsweise im Bereich B2 eine geheimzuhaltende Nachricht entschlüsselt und auf einem Fernschreiber-Lochstreifen gespeichert wird, dann fällt es unbefugten Personen relativ leicht, Kopien derartiger Lochstreifen anzufertigen und auf Fernschreibern den Text zu schreiben.

Bei den folgenden Ausführungsbeispielen wird im Bereich B2 außer einem empfangsbefugten Personenkreis ein nichtempfangsbefugter Personenkreis vorausgesetzt, der nicht die Möglichkeit haben soll, als vertraulich gekennzeichnete Nachrichtentexte zu lesen.

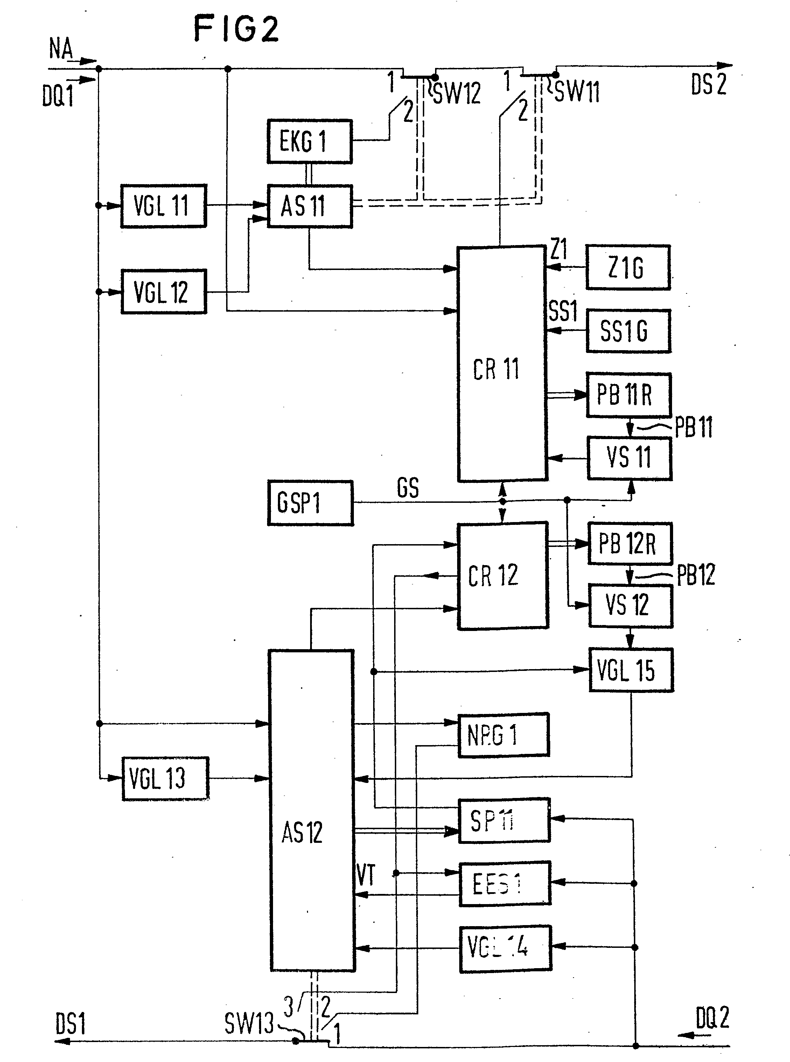

Die Figuren 2 und 4 bzw. die Figuren 3 und 5 zeigen Ausführungsbeispiele der in Fig. 1 dargestellten Zugriffsicherungsgeräte ZS1 bzs. ZS2.

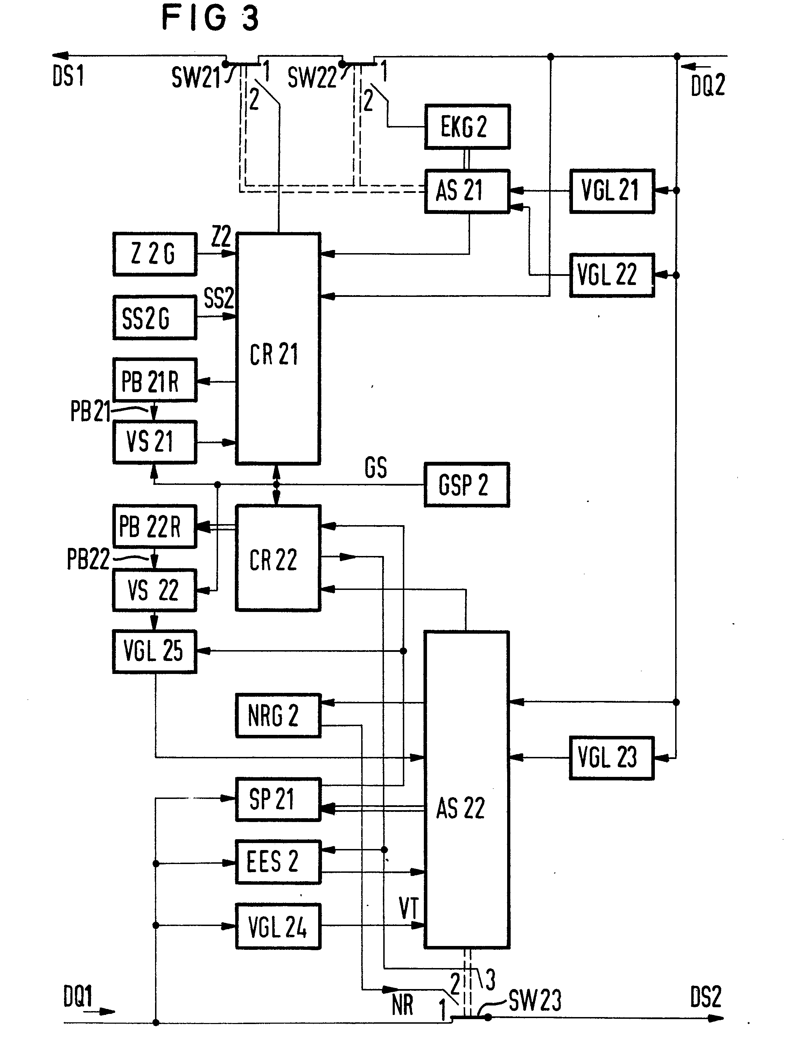

Fig. 2 zeigt die sendeseitigen Geräte, Fig. 3 die empfangsseitigen Geräte. Entsprechende sendeseitige und empfangsseitige Geräte erfüllen die gleiche Funktion und werden mit den Indizes 1 bzw. 2 unterschieden. Beispielsweise erfüllt der in Fig. 2 dargestellte Vergleicher VGL11 die gleiche Funktion wie der in Fig. 3 dargestellte Vergleicher VGL21. Hinsichtlich der Wirkungsweise der in den Figuren 2 und 3 dargestellten Schaltungsanordnungen wird zunächst angenommen, daß die Schalter SW11, SW12 und SW23 ihre erste Schalterstellung einnehmen. Unter dieser Voraussetzung wird von der Datenquelle DQ1 aus der Verbindungsaufbau eingeleitet und es wird die Datensenke DS2 über die bevorstehende Übermittlung eines Nachrichtentextes informiert. Im Zuge dieses Verbindungsaufbaus wird ein nichtverschleierter Vorspann von der Datenquelle DQ1 aus zur Datensenke DS2 übertragen. Dieser nicht verschleierte Vorspann enthält mindestens den Namen des empfangsbefugten Personenkreises und enthält eine Kennung, welche den Nachrichtentext als vertraulich signalisiert.

Es wird angenommen, daß die Kennung im Vorspann zuletzt auftritt und daß unmittelbar danach der Nachrichtentext beginnt. Der Vergleicher VGL11 prüft dauernd, ob in der Nachricht NA eine Kennung auftritt. Beispielsweise kann im Bereich des Vergleichers VGL11 ein Speicher vorgesehen sein, der dauernd eine Kennung abgibt und der Vergleicher VG11 prüft dann dauernd, ob die ihm eingangs zugeführten Daten mit der erzeugten Kennung übereinstimmen oder nicht. Wenn der Vergleicher VGL11 eine Kennung im Vorspann erkennt, dann signalisiert er diese Kennung und das Ende des Vorspanns an die Ablaufsteuerstufe AS11. Die Ablaufsteuerstufe AS11 steuert die beiden Schalter SW11, SW12 und den Endeerkennungsgenerator EKG1. Wenn eine Kennung signalisiert wird, dann stellt die Ablaufsteuerstufe AS11 den Schalter SW11 in seine zweite Schalterstellung. Außerdem startet die Ablaufsteuerstufe AS11 das Verschleierungsgerät CR11.

Zeitlich nacheinander gibt das Verschleierungsgerät CR11 über den Schalter SW11 die Zeitpunktkennung Z1 bzw. den Spruchschlüssel SS1 ab, die im Zeitpunktkennunggenerator Z1G bzw. im Spruchschlüsselgenerator SS1G erzeugt wird. Der Grundschlüsselspeicher GSP1 gibt den Grundschlüssel GS an das Verschleierungsgerät CR11 ab und mit Hilfe dieses Grundschlüssels GS und gemäß einem Algorithmus werden im Prüfbitrechner PB11R die Prüfbits PB11 errechnet. Der Verschlüssler VS11 verschlüsselt mit Hilfe des Grundschlüssels GS die Prüfbits PB11 und gibt die verschlüsselten Prüfbits über das Verschleierungsgerät CR11 und über den Schalter SW11 ab. Es wird angenommen, daß der Grundschlüssel GS ein Zufallstext ist. Der Verschlüssler VS11 könnte anstelle des Grundschlüssels GS auch mit einem anderen Zufallstext betrieben werden.

Nach dem Vorspann gibt die Datenquelle DQ1 einen unverschleierten Nachrichtentext ab, der mit Hilfe des Verschleierungsgerätes CR11 verschleiert wird und über den Schalter SW11 in Schalterstellung 2 abgegeben wird. Das Ende des Nachrichtentextes wird mit einer Endekennung signalisiert, die der Vergleicher VGL12 erkennt und diese Information an die Ablaufsteuerstufe AS11 weitergibt. Danach bewirkt die Ablaufsteuerstufe AS11 die erste Schalterstellung des Schalters SW11 und die zweite Schalterstellung des Schalters SW12. Außerdem wird das Verschleierungsgerät CR11 über das Ende des Nachrichtentextes informiert und die Ablaufsteuerstufe AS11 veranlaßt, daß der Endekennungsgenerator EKG1 eine Endekennung an die Datensenke DS2 abgibt. Danach wird wieder die erste Schalterstellung des Schalters SW12 eingestellt. Die Schalter SW11 und SW12 sind nun bereit für die Übertragung der nächsten Nachricht.

Im folgenden werden die Vorgänge auf der Empfangsseite anhand der Fig. 3 beschrieben. Es wurde bereits erwähnt, daß während des Verbindungsaufbaus eine leitende Verbindung von der Datenquelle DQ1 über die Schalter SW12, SW11 und SW23 zur Datensenke DS2 besteht. Da der Vorspann den empfangsbefugten Personenkreis nennt und die Kennung VT, welche den Nachrichtentext als vertraulich signalisiert, ist auch die Datensenke DS2 diesbezüglich informiert. Beispielsweise kann im Bereich der Datensenke DS2 ein hier nicht dargestellter Fernschreiber vorgesehen sein, der auf einem Blatt Papier mindestens dem empfangsbefugten Personenkreis und den vertraulichen Charakter des zu übertragenden Nachrichtentextes aufschreibt.

Der Vergleicher VGL24 erkennt ebenfalls die Kennung VT und signalisiert den vertraulichen Charakter des folgenden Nachrichtentextes mit dem Bezugszeichen VT an die Ablaufsteuerstufe AS22. Diese Ablaufsteuerstufe AS22 veranlaßt einerseits die zweite Schalterstellung des Schalters SW23 und andererseits die Ausgabe einiger Signale mit Hilfe des Nummerngenerators NRG2. Insbesondere gibt dieser Generator zunächst die Nummer NR ab, die der Fernschreiber im Bereich der Datensenke DS2 zusätzlich zum empfangsbefugten Personenkreis und zusätzlich zur Kennung VT aufschreibt. Danach veranlaßt der Generator NRG2 einen Zeilenvorschub und gibt eine Stoppolarität ab, die den Fernschreiber im Bereich der Datenquelle DS2 in Wartestellung hält. Diese Stoppolarität wird solange abgegeben, bis der vom Verschleierungsgerät CR11 abgegebene verschleierte Nachrichtentext NAT im Speicher SP21 gespeichert ist. Die Endeerkennungsstufe EES2 erkennt das Ende des Nachrichtentextes und signalisiert diese Information zur Ablaufsteuerstufe AS22. Diese Ablaufsteuerstufe AS22 veranlaßt dann, daß der Generator NRG2 eine Nachrichtenendekennung abgibt, die über den Schalter SW23 in Schalterstellung 2 zur Datensenke DS2 gelangt.

Die Verbindung der Datenquelle DQ1 zur Datensenke DS2 ist nun abgebaut. Die Datensenke DS2 besitzt aber noch nicht den übermittelten Nachrichtentext, sondern hat nur eine Meldung, die besagt, daß für einen speziellen empfangsbefugten Personenkreis ein als vertraulich zu behandelnder Nachrichtentext unter einer speziellen Nummer bereitliegt.

Es wurde bereits erwähnt, daß das Verschleierungsgerät CR11 im Anschluß an den Vorspann die Zeitpunktkennung Z1, den Spruchschlüssel SS1, die verschlüsselten Prüfbits und den verschleierten Nachrichtentext abgibt. All dies wird im Speicher SP21 gespeichert.

Im Bereich der Datensenke DS2 wird der empfangsbefugte Personenkreis benachrichtigt, daß unter der speziellen Nummer NR ein vertraulicher Nachrichtentext abrufbar ist. Als empfangsbefugter Personenkreis kann nur eine einzige Person vorgesehen sein, es können aber auch mehrere Personen zum empfangsbefugten Personenkreis gehören. Es wird nun angenommen, es wäre nur eine einzige empfangsbefugte Person genannt worden. Diese Person wurde bereits über den abrufbereiten Nachrichtentext informiert. Im Bereich der Datensenke DS2 veranlaßt die empfangsbefugte Person die Eingabe von Schlüsseldaten und die Eingabe der Nummer NR der Nachricht. Der Vergleicher VGL23 erkennt an den Schlüsseldaten, daß hier kein Verbindungsaufbau von der Datenquelle DQ2 zur Datensenke DS1 beabsichtigt ist, sondern daß ein Nachrichtentext vom Speicher SP21 intern an die Datensenke DS2 ausgelesen werden soll. Die Ablaufsteuerstufe AS22 ordnet der Nummer NR jene Adresse des Speichers SP21 zu, unter der der Nachrichtentext der Nummer NR abgespeichert ist. Nachdem der Vergleicher VGL23 den beabsichtigten Abruf der Daten des Speichers SP21 signalisiert, wird der Speicher SP21 mit der zugeordneten Adresse adressiert und der Speicher SP21 gibt die gespeicherten Daten ab. Am Ausgang des Speichers SP21 erscheinen somit die Zeitpunktkennung Z1 der Spruchschlüssel SS1 und der verschleierte Nachrichtentext NAT. Diese Informationen werden im Verschleierungsgerät CR22 verwertet, das mit der Ablaufsteuerstufe AS22 ebenfalls gestartet wurde. Der Grundschlüsselspeicher GSP2 gibt den Grundschlüssel GS an das Entschleierungsgerät CR22 und an den Verschlüssler VS22 ab. Der Prüfbitrechner PB22R errechnet die Prüfbits PB21, die im Verschlüssler VS22 verschlüsselt werden. Die verschlüsselten und empfangsseitig errechneten Prüfbits werden im Vergleicher VGL25 mit den verschlüsselten Prüfbits des Speichers SP21 verglichen. Bei Übereinstimmung der errechneten und der empfangenen Prüfbits wird der Schalter SW23 in seine dritte Schalterstellung gebracht und über das Entschleierungsgerät CR22 wird der entschleierte Nachrichtentext der Datensenke DS2 zugeleitet. Dort wird dieser Text von der empfangsbefugten Person empfangen.

Nach Übermittlung des Nachrichtentextes erkennt die Endeerkennungsstufe EES2 das Ende dieses Textes und signalisiert diese Information der Ablaufsteuerstufe AS22, die dann die Schalterstellung 1 des Schalters SW23 veranlaßt. Die Datenquelle DQ1 ist nun anschließend in der Lage wieder eine Verbindung zur Datensenke DS2 aufzubauen.

Die Wirkungsweise der in Fig. 3 dargestellten Schaltungsanordnung läßt sich durch die folgenden Verfahrensschritte kennzeichnen.

1. Wenn der Vergleicher VGL24 die Kennung VT erkannt hat, dann wird im Speicher SP21 einerseits die unverschleierte Nachrichtennummer NR und der zugeordnete Nachrichtentext gespeichert, zu dem nur der empfangsbefugte Personenkreis Zugriff hat.

2. Im Bereich der Datensenke DS2 wird eine Meldung abgegeben, welche die Nachrichtennummer NR enthält und aus der hervorgeht, daß ein vertraulicher Nachrichtentext für den empfangsbefugten Personenkreis bereitliegt.

3. Der empfangsbefugte Personenkreis veranlaßt im Bereich der Datenquelle DQ2 die Eingabe der Nachrichtennummer NR und die Eingabe von Schlüsseldaten, die dem empfangsbefugten Personenkreis spezifisch zugeordnet sind. Der Vergleicher VGL23 erkennt die Schlüsseldaten und veranlaßt, daß die Nummer NR in der Ablaufsteuerung AS22 ausgewertet wird. Im Bereich dieser Ablaufsteuerstufe AS22 ist aber die zugeordnete Adresse im Speicher SP21 bekannt, so daß in weiterer Folge der Speicher SP21 den gespeicherten Nachrichtentext an die Datensenke DS2 abgibt.

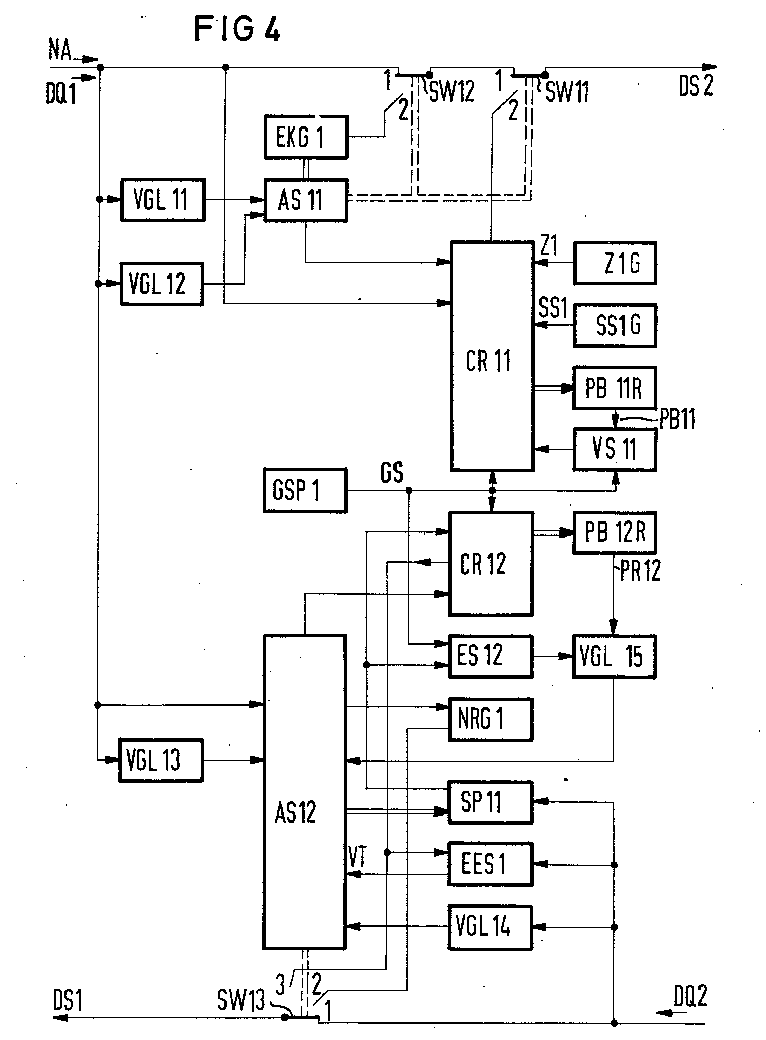

Bisher wurde die Nachrichtenübermittlung von der Datenquelle DQ1 zur Datensenke DS1 beschrieben. Die Nachrichtenübermittlung von der Datenquelle DQ2 zur Datensenke DS1 vollzieht sich in ähnlicher Weise. In der folgenden Tabelle sind die einander entsprechenden, in den Figuren 2 und 4, bzw.

# 0 021 387

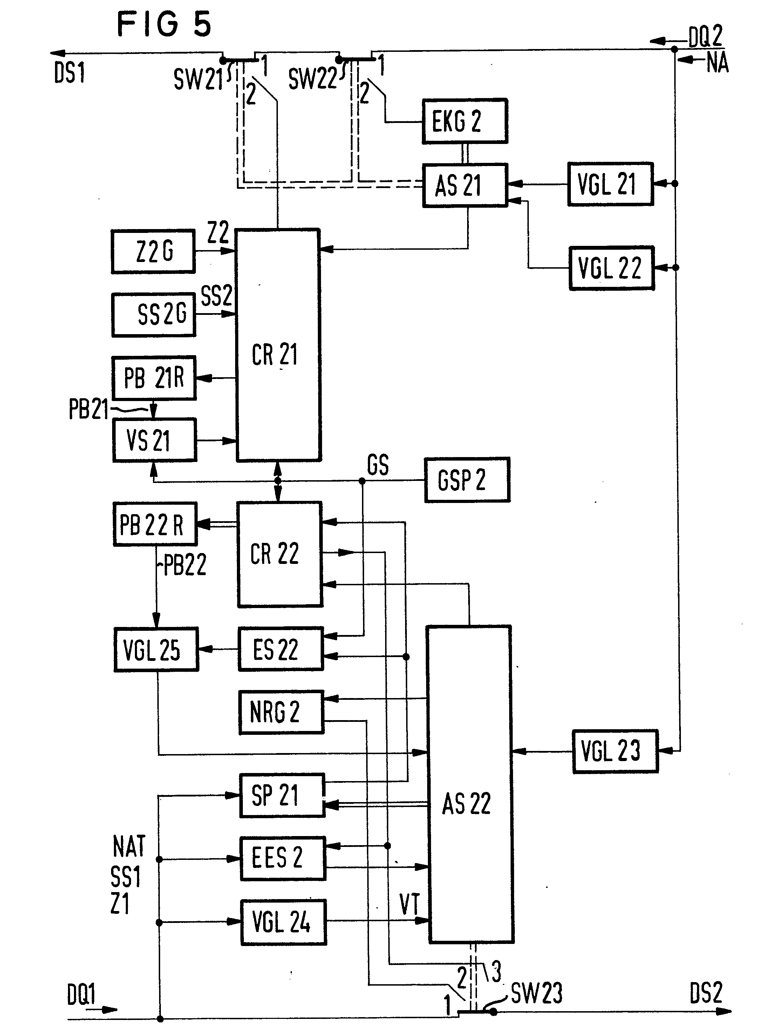

in den Fig. 3 und 5 dargestellten Bauelemente aufgelistet.

| Bauelemente und Daten | Fig. 2 Fig. 4 | Fig. 3 Fig. 5 |
|---|---|---|
| Schalter | SW11 SW12 SW13 | SW21 SW22 SW23 |
| Vergleicher | VGL11 VGL12 VGL13 VGL14 VGL15 | VGL21 VGL22 VGL23 VGL24 VGL25 |
| Endeerkennungsgenerator | EKG1 | EKG2 |
| Ablaufsteuerstufe | AS11 AS12 | AS21 AS22 |
| Verschleierungsgerät | CR11 | CR21 |
| Entschleierungsgerät | CR12 | CR22 |
| Grundschlüsselspeicher | GSP1 | GSP2 |
| Grundschlüssel | GS | GS |
| Zeitpunkterkennungsgenerator | Z1G | Z2G |
| Zeitpunktkennung | Z1 | Z2 |
| Spruchschlüsselgenerator | SS1G | SS2G |
| Spruchschlüssel | SS1 | SS2 |
| Prüfbitrechner | PB11R PB12R | PB21R PB22R |
| Prüfbits | PB11 PB12 | PB21 PB22 |
| Verschlüssler | VS11 VS12 | VS21 VS22 |
| Nummerngenerator | NRG1 | NRG2 |
| Speicher | SP11 | SP21 |
| Endeerkennungsstufe | EES1 | EES2 |
| Entschlüssler | ES12 | ES22 |

Anhand der Fig. 3 wurde ausgeführt, daß die mit dem Prüfbitrechner PB22R errechneten Prübits PB22 im Verschlüssler VS22 verschlüsselt werden und daß diese verschlüsselten Prüfbits dem Vergleicher VGL25 zugeführt und mit den im Speicher SP21 gespeicherten Prüfbits verglichen werden. Im Speicher VGL25 werden somit gemäß Fig. 3 verschlüsselte Prüfbits miteinander verglichen.

Die Figuren 2 bzw 4 und 3 bzw. 5 unterscheiden sich nur hinsichtlich der Erzeugung der Prüfbits. So ist aus Fig. 5 ersichtlich, daß der Prüfbitrechner PB22R die errechneten Prüfbits PB22 unverschlüsselt an den Vergleicher VGL25 abgibt. Die Prüfbits des Speichers SP21 werden dem Entschlüssler ES22 zugeführt, der die verschlüsselten Prüfbits entschlüsselt, so daß im Fall der Fig. 5 im Vergleicher VGL25 entschlüsselte Prüfbits miteinander verglichen werden.

5

Der empfangsbefugte Personenkreis kann aus mehreren Personen bestehen. Gemäß einer ersten Alternative kann jede einzelne Person dieses Personenkreises befugt sein, den Nachrichtentext allein zu empfangen. In diesem Fall sind jeder Person je die gleichen Schlüsseldaten zugeordnet. Gemäß einer zweiten Alternative dürfen die Personen nur gemeinsam den Nachrichtentext empfangen. In diesem fall sind die Schlüsseldaten in mehrere Teile aufgeteilt, von denen je ein Teil je einer Person zugeordnet ist. Wenn alle Personen die ihnen zugeordneten Teile der Schlüsseldaten eingeben, dann wird allen Personen gemeinsam der im Speicher SP21 gespeicherte Nachrichtentext ausgegeben.

Es wäre grundsätzlich möglich, den Nachrichtentext unverschleiert als Klartext im Speicher SP21 zu speichern. Bei der anhand der Figuren 2 bis 5 beschriebenen Erfindung werden die Nachrichtentexte aber in verschlüsselter Form in den Speichern SP21 gemäß Fig. 3 und 5 und in den Speicher SP11 gemäß Fig. 2 und 4 gespeichert. Dies ist vorteilhaft, weil dadurch die widerrechtliche Entnahme der Speicherinhalte zusätzlich erschwert wird.

**Ansprüche**

1. Schaltungsanordnung zur Ausgabe von Nachrichten an einen empfangsbefugten Personenkreis, wobei die Nachrichten aus einem nicht verschleierten Vorspann und einem verschleierten Nachrichtentext gebildet werden, wobei der Vorspann den Namen des empfangsbefugten Personenkreises und eine Kennung enthält, die den Nachrichtentext als vertraulich signalisiert, wobei nach dem Empfang der Nachrichten an einer Datensenke der empfangenden Station der Vorspann ausgegeben wird, und wobei beim Auftreten der Kennung eine Speicherung des nachfolgenden Nachrichtentextes erfolgt, dadurch gekennzeichnet, daß in der empfangenden Station vorgesehen sind : ein interner Speicher (SP21), in dem beim Auftreten der Kennung der nachfolgende Nachrichtentext gespeichert wird, ein Vergleicher (VGL23), der von einer empfangsbefugten Person eingegebene Schlüsseldaten mit gespeicherten Schlüsseldaten vergleicht und bei Übereinstimmung den im Speicher (SP21) gespeicherten Nachrichtentext an der Datensenke (DS2) ausgibt, ein Nummerngenerator (NRG2), der nach dem Empfang der Kennung eine Nummer an der Datensenke (DS2) ausgibt, die der Adresse des Nachrichtentextes im Speicher (SP21) zugeordnet ist, und ein Entschleierungsgerät (CR22), das dem Speicher (SP21) nachgeschaltet ist, und das den Nachrichtentext vor einer Ausgabe an der Datensenke (DS2) entschleiert.

2. Schaltungsanordnung nach Anspruche 1 dadurch gekennzeichnet, daß die Schlüsseldaten der empfangsbefugten Person in einem Festwertspeicher gespeichert sind, der über einen Stecker eine den Schlüsseldaten zugeordnete Datenkombination an den Vergleicher (VGL23) abgibt.

3. Schaltungsanordnung nach Anspruch 1 oder 2, dadurch gekennzeichnet, daß ein Prüfbitrechner (PB22R) vorgesehen ist, der aus einem Grundschlüssel Prüfbits (PB22) errechnet, daß dem Prüfbitrechner (PB22R) ein Verschlüssler (VS22) nachgeschaltet ist, der die Prüfbits (PB22) verschlüsselt und daß dem Verschlüssler (VS22) ein weiterer Vergleicher (VGL25) nachgeschaltet ist, der die verschlüsselten Prüfbits mit empfangenen und im Speicher (SP1) gespeicherten Prüfbits vergleicht und bei Übereinstimmung ein Signal abgibt, das die Ausgabe des Nachrichtentextes an die Datensenke (DS2) freigibt.

4. Schaltungsanordnung nach einem der Ansprüche 1 bis 3, dadurch gekennzeichnet, daß ein Prüfbitrechner (PB22R) vorgesehen ist, der aus einem Grundschlüssel Prüfbits (PB22) errechnet und daß dem Prüfbitrechner (PB22R) ein weiterer Vergleicher (VGL25) nachgeschaltet ist, der die Prüfbits (PB22) mit den im Speicher (SP21) gespeicherten und mittels eines Entschlüsselungsgeräts (ES22) entschlüsselten Prüfbits vergleicht und bei Übereinstimmung ein Signal abgibt, das die Ausgabe des Nachrichtentextes an die Datensenke (DS2) freigibt.

**Claims**

1. Circuit arrangement for the emission of communications to a circle of individuals authorised for reception, where the communications consist of a non-camouflaged leader and a camouflaged communication text, where the leader contains the name of the reception-authorised circle of individuals and a code which indicates that the communication text is confidential, where following the reception of the communications in a data sink in the receiving station the leader is emitted and where on the occurrence of the code the subsequent communication text is stored, characterised in that the receiving station contains : an internal store (SP21) which, on the occurrence of the code, stores the subsequent communication text ; a comparator (VGL23) which compares items of code data input by a reception-authorised individual with stored items of code data and in the event of identity emits the communication text stored in the store (SP21) to the data sink (DS2) ; a number generator (NRG2) which following the reception of the code supplies the data sink (DS2) with a number which is assigned to the address of the communication text in the store (SP21) ; and a decamouflaging device (CR22) which is connected following the store (SP21) and which decamouflages the communication text before it is output to the data sink (DS2).

2. Circuit arrangement as claimed in claim 1, characterised in that the items of code data of the reception-authorised individual are stored in a ROM which, via a plug, supplies the comparator (VGL23) with a data combination assigned to the items of code data.

3. Circuit arrangement as claimed in claim 1 or 2, characterised in that a test bit computer (PB22R) is provided which computes test bits (PB22) from a basic code, that the test bit computer (PB22R) is followed by an encoder (VS22) which encodes the tests bits (PB22), and that the encoder (VS22) is followed by a further comparator (VGL25) which compares the encoded test bits with received test bits which are stored in the store (SP1) and in the event of identity emits a signal which enables the output of the communication text to the data sink (DS2).

4. Circuit arrangement as claimed in one of the claims 1 to 3, characterised in that a test bit computer (PB22R) is provided which computes test bits (PB22) from a basic code, and that the test bit computer (PB22) is followed by a further comparator (VGL25) which compares the test bits (PB22) with the test bits which are stored in the store (SP21) and which have been decoded by means of a decoder (ES22) and in the event of identity emits a signal which enables the output of the communication text to the data sink (DS2).

**Revendications**

1. Montage pour délivrer des messages à un cercle de personnes autorisées, les messages étant constitués par une amorce non cryptographiée et un texte de message cryptographié, l'amorce contenant le nom du cercle de personnes autorisées et un indicatif qui signale le texte de message comme étant secret, l'amorce étant émise après la réception du message au niveau d'un collecteur de données de la station qui reçoit et qu'à l'apparition de l'indicatif a lieu une mémorisation du texte de message qui suit, caractérisé par le fait qu'il est prévu dans la station qui reçoit une mémoire interne (SP21) dans laquelle est mémorisée à l'apparition de l'indicatif, le texte du message qui suit, un comparateur (VGL23) qui compare, avec des données de clé, des données de clé introduites par une personne autorisée et qui, s'il y a concordance, délivre le texte de message mémorisé dans la mémoire (SP21), au niveau du collecteur de données (DS2), un générateur de numéro (NRG2) qui, après la réception de l'indicatif fournit un numéro au niveau du collecteur de données (DS2), qui est associé à l'adresse du texte de message contenu dans la mémoire (SP21) et un appareil de décryptage (CR22) qui est monté en aval de la mémoire (SP21) et qui décrypte le texte de message avant une délivrance au niveau du collecteur de données (DS2).

2. Montage selon la revendication 1, caractérisé par le fait que les données-clé de la personne autorisée sont mémorisées dans une mémoire morte qui émet au comparateur (VL23) une combinaison de données qui est associée aux données-clé.

3. Montage selon la revendication 1 ou 2, caractérisé par le fait qu'il est prévu un calculateur de bits de contrôle (PB22R) qui calcule, à partir d'une clé de base des bits de contrôle (PB22), qu'en aval du calculateur de bits de contrôle (PB22R) est prévu un codeur (VS22) qui code les bits de contrôle (PB22) et qu'en aval du codeur (VS22) est prévu un second comparateur (VGL25) qui compare les bits de contrôle codés avec des bits de contrôle reçus et mémorisés dans la mémoire (SP1) et qui, lorsqu'il y a coïncidence, émet un signal qui autorise la délivrance du texte de message au collecteur de données (DS2).

4. Montage selon l'une des revendications 1 à 3, caractérisé par le fait qu'il est prévu un calculateur de bits de contrôle (PB22R) qui calcule des bits de contrôle (PB22) à partir d'une clé de base, et qu'en aval du calculateur de bits de contrôle (PB22R) est monté un second comparateur (VGL25) qui compare les bits de contrôle (PB22) avec des bits de contrôle mémorisés dans la mémoire (SP21) et décodés à l'aide d'un appareil de décodage (ES22) et qui, s'il y a coïncidence, émet un signal qui autorise la délivrance du texte du message au collecteur de données (DS2).

0 021 387

# FIG 1

FIG 2

FIG 3

0 021 387

FIG 4

# FIG 5